# FASCICULE DE BREVET EUROPEEN

(11) **EP 1 110 821 B1**
(45) Date de publication et mention de la délivrance du brevet: **03.09.2003**
(21) Numéro de dépôt: 00127238.4
(22) Date de dépôt: 15.12.2000
(51) Int. Cl.: B60R 13/00, B60H 1/00

(54) **Préconditionnement de l'habitacle d'un véhicule à l'arrêt**
Vorbehandlung des Fahrgastraumes eines stehenden Fahrzeuges
Preconditioning of the interior of a stationary vehicle

(30) Priorité: 20.12.1999 FR 9916069
(43) Date de publication de la demande: 27.06.2001
(73) Titulaire: VALEO CLIMATISATION, 78321 La Verrière (FR)
(72) Inventeur: Ben Fredj, Mounir, 78180 Montigny le Bretonneux (FR)
(74) Mandataire: Gérard, Michel

(56) Documents cités:
- EP-A- 0 357 844
- EP-A- 0 814 132
- DE-A- 4 418 490
- DE-A- 19 819 552
- US-A- 4 887 890
- US-A- 5 774 255

## Description

L'invention concerne un procédé pour modifier les caractéristiques optiques de parties visibles d'un véhicule, situées à l'intérieur ou à l'extérieur de l'habitacle, à l'exception du vitrage.

Un procéde ayant les caractéristiques du préambule de la revendication 1 est décrit dans le document EP-A-0 814 132.

Les impératifs de coûts entaînent les constructeurs automobiles à standardiser les fabrications, alors que les utilisateurs désirent que leur véhicule soit personnalisé, notamment au niveau du choix des couleurs de la carrosserie et des garnitures intérieures. Le souhait des utilisateurs serait même de pouvoir modifier à volonté la couleur de l'habitacle, selon le temps qu'il fait, la couleur de leurs vêtements ou tout simplement selon leur humeur.

Le but de l'invention est de satisfaire ces besoins contradictoires.

L'invention atteint on but par le fait que l'on dépose sur lesdites parties visibles un film complexe contenant au moins un matériau de fonction X-chromique.

Le système peut être purement passif. Dans ce cas, le matériau de fonction est un matériau thermochromique qui change de caractéristiques optiques, notamment de couleur, en fonction de la température ambiante.

Les modifications des caractéristiques optiques peuvent également être obtenues par une action volontaire de l'utilisateur. Dans ce cas, le matériau de fonction est du type magnétochrome ou électrochrome susceptible de prendre au moins deux états en fonction de la tension appliquée sur des électrodes du film complexe. L'absence de tension correspond à un premier état et la présence d'une tension correspond à un deuxième état.

Le procédé selon l'invention peut également être utilisé pour préconditionner la température dans l'habitacle du véhicule à l'arrêt.

Lorsqu'un véhicule est exposé au soleil par temps chaud pendant un arrêt prolongé, la température de l'air dans l'habitacle devient nettement supérieure à la température extérieure. Ceci est dû au fait que l'habitacle est soumis aus radiations solaires traversant le pare-brise et les vitres du véhicule. Non seulement l'air de l'habitacle est réchauffé, mais les garnitures de l'habitacle emmagasinent de l'énergie thermique.

Actuellement, les boucles frigorifiques montées sur les véhicules automobiles sont dimensionnées pour permettre l'évacuation de l'énergie thermique emmagasinée dans l'habitacle au cours d'un arrêt prolongé en plein soleil par temps chaud. L'essai principal de toutes les procédures de qualification des boucles frigorifiques correspond à la mesure de la vitesse de descente de la température après un chambrage de l'habitacle dans les conditions décrites ci-dessus. L'énergie dépensée pour entretenir une température de confort dans un véhicule est de loin inférieure à celle demandée dans la phase de démarrage après un arrêt prolongé en plein soleil par temps chaud. En outre, si le système de climatisation est suffisamment puissant pour faire descendre rapidement la température dans l'habitacle, il est particulièrement désagréable pour les usagers d'entrer dans un véhicule surchauffé.

Pour remédier à ces défauts, et permettre éventuellement d'installer une boucle de climatisation d'air ayant des composants plus petits, il est déjà connu plusieurs solutions.

L'une de ces solutions consiste à stocker du froid dans un sel à changement de phase ou dans un matériau à fort coefficient de chaleur spécifique. La quantité de frigories stockées est proportionnelle au poids du système. Cette solution engendre donc un surpoids et elle n'a pas une bonne disponibilité, car elle nécessite une régénération souvent lente des frigories après le démarrage.

Une autre solution consiste à ventiler l'habitacle à l'arrêt pour évacuer la bulle d'air emmagasiné dans le véhicule et le remplacer par de l'air extérieur nettement plus frais. Il est à noter que si l'air extérieur est à 45°C, la température à l'intérieur de l'habitacle peut atteindre 85°C après une heure d'exposition en plein soleil. Toutefois, l'effet de ce renouvellement d'air reste de deuxième ordre, car l'échauffement de la planche de bord, des sièges et des autres garnitures se fait par radiation directe de la lumière solaire à travers le vitrage du véhicule, et la chaleur emmagasinée par ces garnitures entraînera un réchauffement rapide de l'air renouvelé.

La meilleure solution résiderait dans un protection totale des vitrages du véhicule contre les radiations solaires. Eventuellement une ventilation de l'habitacle pourrait y être associée.

Cependant, les solutions qui existent actuellement pour isoler l'habitacle sont soit mécaniques soit optiques. Les solutions mécaniques, au moyen de stores, par exemple, sont difficiles à mettre en oeuvre. Les solutions optiques au moyen de films électrochromes ou à cristaux liquides sont élégantes, mais présentent quelques inconvénients. Les films électrochromes déposés sur le vitrage entraînent une opacité du vitrage et conduisent à son réchauffement. Le vitrage rayonne alors dans l'Infra-Rouge vers l'habitacle. L'inclusion d'un film à cristaux liquides dans le vitrage ou l'application d'un film à cristaux liquides sur le vitrage, les cristaux pouvant prendre un état transparent ou un état réfléchissant sous l'action d'un champ électrique, présente un risque dans la mesure où un défaut électrique pourrait entraîner des accidents graves au cours de la conduite du véhicule par suite du manque de visibilité à travers les vitres.

Pour permettre le préconditionnement de la température dans l'habitacle du véhicule, notamment à l'arrêt et notamment par temps chaud, le matériau de fonction choisi peut prendre un premier état transparent et un deuxième état réfléchissant qui permet d'isoler les parties recouvertes par ledit film complexe d'au moins une partie du rayonnement incident, notamment le rayonnement solaire.

On utilise ainsi les avantages des matériaux à effet réfléchissant réversible, comme les films à cristaux liquides, sans exposer les usagers du véhicule à des risques de sécurité en cours de roulage par suite de pannes électriques.

Ce film complexe peut recouvrir les parois externes qui délimitent l'habitacle, les faces externes des portières et le dessus du pavillon. Les rayons solaires qui frappent ces parois sont réfléchis vers l'extérieur. Ceci évite une surchauffe des parois. Il est à noter que cette fonction peut être réalisée en cours de roulage du véhicule par temps chaud et permet une économie d'énergie frigorifique fournie par la boucle frigorifique.

Le film complexe peut également recouvrir une partie des garnitures internes de l'habitacle, notamment la planche de bord, les garnitures des portières et du pavillon, une poignée de portière, le volant. Les sièges du véhicule peuvent également être recouverts dudit film. Ce film peut se présenter sous la forme d'une pellicule ou peut enrober les fils du tissu des sièges ou autres garnitures.

Dans le cas où à l'intérieur du véhicule, il existe des lampes, par exemple des lampes à infrarouge, pour le dégivrage ou le désembuage du pare-brise, le film doit protéger les garnitures du rayonnement de ces lampes qui peuvent être dirigées accidentellement en partie vers elles. Mais le film ne filtre pas forcément tout le rayonnement.

Avantageusement, le changement d'état est commandé électriquement, soit manuellement par le conducteur à partir du poste de conduite, soit automatiquement en fonction de la température de l'air extérieur et de l'ensoleillement.

De préférence, le film est à l'état réfléchissant, lorsque le matériau de fonction est soumis à un champ électrique, et à l'état transparent en l'absence de champ électrique. Le film complexe comporte dans ce cas des électrodes sous forme de minces couches électriquement conductrices, susceptibles d'être alimentées par un courant électrique. La tension électrique est maintenue par l'action d'une cellule photovoltaïque.

Lorsque le film recouvrant les garnitures internes de l'habitacle est mis à l'état réfléchissant, les rayons solaires qui viennent frapper le film sont réfléchis vers l'intérieur de l'habitacle ou l'extérieur. Ceci évite une surchauffe de la garniture équipée du film complexe.

Le matériau de fonction comporte avantageusement des cristaux liquides. Ces derniers sont choisis de préférence parmi les cristaux liquides qui permettent de modifier les propriétés optiques du film entre un premier état transparent, un deuxième état réfléchissant et un troisième état opaque, le choix entre l'état réfléchissant et l'état opaque étant fonction de l'intensité du champ électrique, l'état opaque permettant avantageusement d'accentuer le réchauffement des garnitures sous l'effet du rayonnement solaire par temps froid.

Selon une autre caractéristique de l'invention, le film complexe comporte plusieurs matériaux de fonction complémentaires dont la couleur est commandée électriquement.

Cette caractéristique permet de modifier à volonté les couleurs des garnitures, en fonction de la tension appliquée sur les électrodes. Le choix de la tension peut être effectuée automatiquement par un système électronique en fonction de l'identification du conducteur.

Selon une autre caractéristique de l'invention, on ventile l'habitacle, par temps chaud, lorsque la différence entre la température à l'intérieur de l'habitacle et la température extérieure est supérieure à une valeur prédéterminée, afin d'évacuer la bulle d'air chaud de l'habitacle.

Cette fonction peut être gérée par le système électronique du véhicule. Après le renouvellement de l'air de l'habitacle, il faudra un temps plus élevé pour surchauffer l'air renouvelé, du fait que les garnitures sont isolées du rayonnement solaire.

## Revendications

1. Procédé pour modifier les caractéristiques optiques de parties visibles d'un véhicule, situées à l'intérieur ou à l'extérieur de l'habitacle, à l'exception du vitrage, **caractérisé par le fait que** l'on dépose sur lesdites parties un film complexe contenant au moins un matériau de fonction X-chromique.

2. Procédé selon la revendication 1, **caractérisé par le fait que** le matériau de fonction est un matériau thermochromique qui change de caractéristique optique, notamment de couleur, en fonction de la température.

3. Procédé selon la revendication 1, **caractérisé par le fait que** le matériau de fonction est du type magnétochrome ou électrochrome susceptible de prendre au moins deux états en fonction de la tension appliquée sur des électrodes du film complexe.

4. Procédé selon la revendication 3, **caractérisé par le fait que** le matériau de fonction peut prendre un premier état transparent et un deuxième état réfléchissant qui permet d'isoler les parties recouvertes par ledit film complexe d'au moins une partie du rayonnement incident, notamment le rayonnement solaire.

5. Procédé selon l'une des revendications 2 à 4, **caractérisé par le fait que** au moins une partie des garnitures internes de l'habitacle, notamment la planche de bord, sont recouvertes dudit film complexe.

6. Procédé selon l'une des revendications 4 ou 5, **caractérisé par le fait que** le film comporte des électrodes et est à l'état réfléchissant lorsque les électrodes sont soumis à une tension électrique, et à l'état transparent en l'absence de tension.

7. Procédé selon la revendication 6, **caractérisé par le fait que** la tension électrique est maintenue par l'action d'une cellule photovoltaïque.

8. Procédé selon l'une des revendications 6 ou 7, **caractérisé par le fait que** le matériau de fonction comporte des cristaux liquides.

9. Procédé selon la revendication 8, **caractérisé par le fait que** les cristaux liquides permettant de modifier les propriétés optiques dudit film entre un premier état transparent, un deuxième état réfléchissant et un troisième état opaque, le choix entre l'état réfléchissant étant fonction de l'intensité du champ électrique, l'état opaque permettant d'accentuer le réchauffement des garnitures sous l'effet du rayonnement solaire par temps froid.

10. Procédé selon l'une des revendications 4 à 9, **caractérisé par le fait que** le film complexe comporte plusieurs matériaux de fonction complémentaires dont la couleur est commandée électriquement.

11. Procédé selon l'une des revendications 4 à 10, **caractérisé par le fait qu'**il est utilisé pour préconditionner la température dans l'habitacle du véhicule à l'arrêt.

12. Procédé selon la revendication 11, **caractérisé par le fait que** l'on ventile l'habitacle, lorsque la différence entre la température à l'intérieur de l'habitacle et la température extérieure est supérieure à une valeur prédéterminée, afin d'évacuer la bulle d'air chaud de l'habitacle.

13. Procédé selon l'une des revendications 2 à 4, **caractérisé par le fait que** au moins une poignée de portière et/ou le volant sont recouverts dudit film complexe.

## Patentansprüche

1. Verfahren zum Verändern der optischen Eigenschaften von sichtbaren Teilen oder Abschnitten eines Fahrzeuges, befindlich im Inneren oder äußerlich des Innenraumes, ausschließlich der Verglasung, **dadurch gekennzeichnet, dass** man an den Teilen oder Abschnitten einen komplexen Film vorsieht, enthaltend zumindest ein X-chromatisches Funktionsmaterial.

2. Verfahren nach Anspruch 1, **dadurch gekennzeichnet, dass** das Funktionsmaterial ein thermo-chromatisches Material ist, welches die optischen Eigenschaften, insbesondere die Farbe,in Abhängigkeit von der Temperatur ändert.

3. Verfahren nach Anspruch 1, **dadurch gekennzeichnet, dass** das Funktionsmaterial vom magneto-chromatischen oder elektro-chromatischen Typ ist, fähig, zumindest zwei Zustände einzunehmen in Abhängigkeit von der an den Elektroden des komplexen Filmes angelegten Spannung.

4. Verfahren nach Anspruch 3, **dadurch gekennzeichnet, dass** das Funktionsmaterial einen ersten transparenten Zustand und einen zweiten reflektierenden Zustand einnehmen kann, der es ermöglicht, die von dem komplexen Film bedeckten oder abgedeckten Teile oder Abschnitte bezüglich zumindest eines Teiles der einfallenden Strahlung, insbesondere der Sonneneinstrahlung, zu isolieren oder abzuschirmen.

5. Verfahren nach einem der Ansprüche 2 bis 4, **dadurch gekennzeichnet, dass** zumindest ein Teil der Innengarnituren bzw. Verkleidungen oder Ausstattungen des Innenraumes, insbesondere das Armaturenbrett mit dem komplexen Film bedeckt ist bzw. sind.

6. Verfahren nach einem der Ansprüche 4 oder 5, **dadurch gekennzeichnet, dass** der Film Elektroden umfasst und in reflektierendem Zustand vorliegt, wenn an den Elektroden elektrische Spannung angelegt ist, und in transparentem Zustand beim Fehlen einer Spannung.

7. Verfahren nach Anspruch 6, **dadurch gekennzeichnet, dass** die elektrische Spannung aufrechterhalten wird durch die Wirkung einer photovoltaischen Zelle.

8. Verfahren nach einem der Ansprüche 6 oder 7, **dadurch gekennzeichnet, dass** das Funktionsmaterial Flüssigkristalle umfasst.

9. Verfahren nach Anspruch 8, **dadurch gekennzeichnet, dass** die Flüssigkristalle in der Lage sind, die optischen Eigenschaften des Films zu verändern, zwischen einem ersten transparenten Zustand, einem zweiten reflektierenden Zustand und einem dritten opaken Zustand, wobei die Auswahl zwischen dem reflektierenden Zustand in Abhängigkeit von der Intensität des elektrischen Feldes erfolgt, wobei der opake Zustand die Erwärmung von Garnituren oder Ausstattungselementen unter der Wirkung der Solareinstrahlung bei kalter Witterung unterstützen kann.

10. Verfahren nach einem der Ansprüche 4 bis 9, **dadurch gekennzeichnet, dass** der komplexe Film mehrere komplementäre Funktionsmaterialien umfasst, deren Farbe oder Färbung elektrisch steuerbar ist.

11. Verfahren nach einem der Ansprüche 4 bis 10, **dadurch gekennzeichnet, dass** es verwendet wird zur Vorkonditionierung der Temperatur in dem Innenraum des Fahrzeugs beim Halten oder Stillstand.

12. Verfahren nach Anspruch 11, **dadurch gekennzeichnet, dass** man den Innenraum belüftet, wenn die Differenz zwischen der Temperatur im Inneren des Innenraums und der Temperatur äußerlich größer ist als ein vorbestimmter Wert, um die Warmluftblase des Innenraums zu evakuieren.

13. Verfahren nach einem der Ansprüche 2 bis 4, **dadurch gekennzeichnet, dass** zumindest ein Türgriff und/oder das Lenkrad von dem komplexen Film bedeckt wird/abgedeckt ist bzw. sind.

## Claims

1. Method for modifying the optical characteristics of visible parts of a vehicle, situated inside or outside the cabin, with the exception of the glazing, **characterised by** the fact that a complex film containing at least one material with an X-chromic function is deposited on the said parts.

2. Method according to Claim 1, **characterised by** the fact that the function material is a thermochromic material which changes optical characteristics, in particular colour, according to the temperature.

3. Method according to Claim 1, **characterised by** the fact that the function material is of the magnetochromic or electrochromic type able to take at least two states according to the voltage applied to electrodes on the complex film.

4. Method according to Claim 3, **characterised by** the fact that the function material can take a first transparent state and a second reflective state which makes it possible to isolate the parts covered by the said complex film from at least some of the incident radiation, in particular the solar radiation.

5. Method according to one of Claims 2 to 4, **characterised by** the fact that at least some of the internal linings of the cabin, in particular the dashboard, are covered with the said complex film.

6. Method according to one of Claims 4 or 5, **characterised by** the fact that the film comprises electrodes and is in the reflective state when the electrodes are subjected to an electrical voltage and in the transparent state in the absence of any voltage.

7. Method according to Claim 6, **characterised by** the fact that the electrical voltage is maintained by the action of a photovoltaic cell.

8. Method according to one of Claims 6 or 7, **characterised by** the fact that the function material comprises liquid crystals.

9. Method according to Claim 8, **characterised by** the fact that the liquid crystals modify the optical properties of the said film between a first transparent state, a second reflective state and a third opaque state, the choice between the reflective state being a function of the intensity of the electrical field, the opaque state making it possible to accentuate the heating of the linings under the effect of solar radiation in cold weather.

10. Method according to one of Claims 4 to 9, **characterised by** the fact that the complex film comprises several complementary function materials whose colour is controlled electrically.

11. Method according to one of Claims 4 to 10, **characterised by** the fact that it is used for preconditioning the temperature in the cabin of the vehicle when stopped.

12. Method according to Claim 11, **characterised by** the fact that the cabin is ventilated when the difference between the temperature inside the cabin and the external temperature is greater than a predetermined value, in order to discharge the hot air bubble from the cabin.

13. Method according to one of Claims 2 to 4, **characterised by** the fact that at least one door handle and/or the steering wheel are covered with the said complex film.
